# EUROPEAN PATENT APPLICATION

(11) **EP 1 748 235 A1**
(43) Date of publication of application: **31.01.2007**
(21) Application number: 05425550.0
(22) Date of filing: 27.07.2005
(51) Int. Cl.: F16K 15/14

(54) **Improved valve assembly**

(71) Applicant: Pres-Block S.P.A., 10040 Caselette (IT)
(72) Inventor: Nicolino, Aldo, 10040 Caselette (IT)
(74) Representative: D'Angelo, Fabio

(57) **Abstract**

There is described a valve assembly (1, 1') having a casing (2) defining a cavity (3) for passage of a fluid; and a valve (4) housed in the cavity (3); the valve (4) has first sealing means (18) cooperating with the casing (2) to divide the cavity (3) into a first and a second environment (6, 5); at least one opening (23) permitting flow of the fluid between the first and second environment (6, 5); and second sealing means (19) varying in configuration to permit/prevent communication between the first and second environment (6, 5) through the opening (23); and the second sealing means (19) also cooperate with the casing (2), on the side facing the second environment (5), to prevent the first and second environment (6, 5) from communicating fluidically through the opening (23).

## Description

The present invention relates to an improved valve assembly, in particular for use in household coffee machine water circulation conduits.

Valve assemblies are known, as described for example in Patent W002088580, which comprise a casing defining a fluid flow cavity; and a valve housed inside the casing to separate a first and a second environment of the flow cavity hermetically when the pressure in the first environment exceeds the pressure in the second environment by an amount above a predetermined threshold value.

More specifically, the valve substantially comprises a disk-shaped base member having an opening to permit fluid flow between the first and the second environment separated by the base member; and an elastically deformable ring cooperating with the base member to fix the base member hermetically inside the cavity. The valve also comprises a flexible shutter having, on the side facing the first environment, a membrane portion which, by virtue of fluid pressure, cooperates elastically with the opening to separate the first and second environment hermetically.

As stated, valve assemblies of the above type permit fluid flow between the first and second environment when the difference in pressure between the first and second environments is less than or equal to the predetermined threshold value.

To this end, the base member also comprises, on the side facing the first environment, a recess communicating with the opening and selectively engageable by the membrane portion to permit fluid flow through the base member for pressure difference threshold values depending on the geometry of the recess.

Though efficient and reliable, valves of the above type still leave room for improvement. In particular, a need is felt to reduce the number of component parts, so as to reduce the number of moving parts and simplify component machining and assembly.

It is an object of the present invention to provide a valve assembly designed to satisfy the aforementioned need in a straightforward, low-cost manner.

According to the present invention, there is provided a valve assembly as claimed in Claim 1.

A preferred, non-limiting embodiment of the present invention will be described by way of example with reference to the accompanying drawings, in which:
Figure 1 shows an axial section of a valve assembly in accordance with the present invention and in the closed position;
Figure 2 shows a section along line II-II in Figure 1;
Figure 3 shows an axial section of a further embodiment of the Figure 1 valve assembly in the closed position;
Figure 4 shows a section along IV-IV in Figure 3;
Figure 5 shows a top plan view of a detail in Figure 1;
Figure 6 shows a side view of the Figure 5 detail.

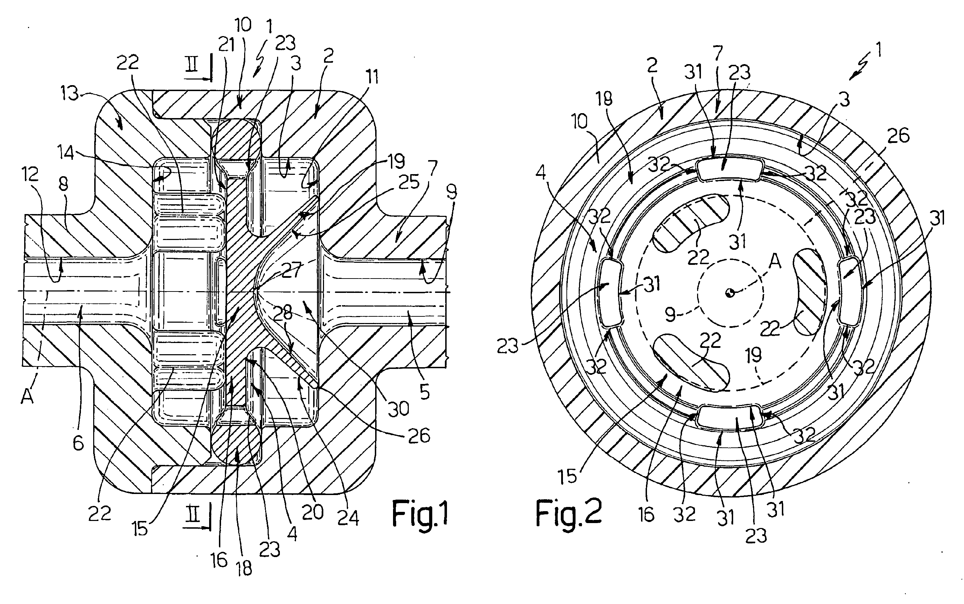

With reference to Figures 1 and 2, number 1 indicates as a whole a valve assembly in accordance with the present invention, and particularly suitable for use in household coffee machine water circulation conduits.

Valve assembly 1 comprises a casing 2 defining a fluid flow cavity 3; and a valve 4 housed hermetically inside cavity 3 to control flow between two separate environments 5, 6 of cavity 3 separated by valve 4.

More specifically, casing 2 has an axis A, and comprises a body 7 and a body 8, which extend axially on opposite sides towards environments 5 and 6 respectively.

Body 7 comprises an axial fluid conduit 9; and an axial end portion 10 larger radially than conduit 9 and connected to conduit 9 by a radial wall 11.

Similarly, body 8 comprises an axial fluid conduit 12 extending on the opposite side to conduit 9; and an axial end portion 13, which is larger radially than conduit 12, is fixed to portion 10 of body 7 in a manner not shown, and is connected to conduit 12 by a radial wall 14.

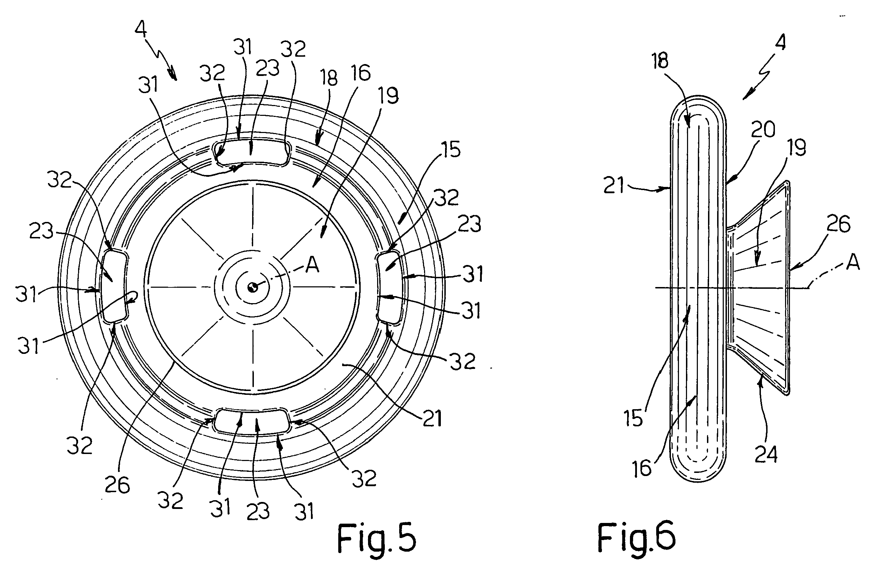

Valve 4, shown in more detail in Figures 5 and 6, is housed coaxially inside casing 2, and comprises a portion 15 which cooperates hermetically with portion 10 of body 7 and permits fluid flow between environments 5 and 6.

More specifically, at its radially outer end, portion 15 comprises a toroidal portion 18 cooperating radially and hermetically with portion 10; and an annular portion 16 no larger axially than portion 18, and connected at its radial ends to portion 18.

At the join between portion 16 and portion 18, portion 15 also comprises a number of - in the example shown, four - axially through openings 23 permitting passage between environments 5 and 6.

More specifically, openings 23 are equally spaced angularly about axis A, and each comprise a contour defined by two radially opposite circumferential portions 31 connected by two angularly opposite radial portions 32.

Portion 15 is bounded axially towards environments 5 and 6 by respective end surfaces 20 and 21. More specifically, end surface 21 cooperates with a number of - in the example shown, three - appendixes 22 equally spaced angularly and projecting axially from wall 14 towards valve 4 to hold valve 4 in position axially.

Valve 4 also comprises a portion 19 varying in configuration to permit/prevent communication between environments 5 and 6.

Portion 19 advantageously also cooperates hermetically with casing 2, on the side facing environment 5, to prevent environments 5 and 6 from communicating fluidically through openings 23.

More specifically, at portion 16, portion 19 extends from portion 15 towards environment 5 to define, with body 7, a cavity 30 which is cut off fluidically from openings 23 when the pressure in environment 6 exceeds the pressure in environment 5 by an amount above a predetermined threshold value P. Conversely, cavity 30 is connected fluidically to openings 23, to permit fluid flow through openings 23, when the pressure in environment 6 exceeds the pressure in environment 5 by an amount below predetermined threshold value P.

More specifically, portion 19 comprises a radially outer, truncated-cone-shaped profile 24 connected to portion 16 on the opposite side to environment 5; a radially inner, concave profile 25; and a circular axial end 26 cooperating hermetically with wall 11 of body 7.

More specifically, profile 24 diverges towards environment 5, and, together with profile 25, defines end 26 on the environment 5 side.

Profile 25 comprises a curved portion 27 at portion 16; and a truncated-cone-shaped portion 28 interposed axially between portion 27 and end 26, and diverging towards environment 5.

More specifically, profiles 24 and 25 are shaped so that portion 19 has an axial section tapering from portion 15 to end 26.

Cavity 30 is therefore bounded by profile 25 of portion 19 and by wall 11, and is open at conduit 9.

Portions 19 and 15 are defined integrally by one body and made of flexible material. More specifically, portions 19 and 15 are preferably made of an organic polymer compatible with use in contact with food products, e.g. silicone.

In actual use, when the pressure in environment 6 exceeds the pressure in environment 5 by an amount above threshold value P, end 26 adheres to wall 11 of body 7, so that cavity 30 is cut off fluidically from openings 23 to separate environments 5 and 6 in fluidtight manner.

Conversely, when the difference in pressure between environments 6 and 5 is less than or equal to threshold value P, the fluid in cavity 30 detaches end 26 from wall 11, so that cavity 30 is connected fluidically to openings 23 to allow fluid flow between environments 6 and 5; which characteristic may be used to prevent fluid stagnating in environment 5 when the pressure in environment 5 falls as a result, for example, of a delivery pump connected to cavity 3 being turned off.

Threshold value P, corresponding to the maximum pressure difference value at which fluid flows both ways through cavity 3, may obviously be varied by varying the shape of portion 19.

With no change in the shape of portion 19, threshold value P may obviously also be varied by varying the axial position of wall 11 with respect to end 26.

More specifically, moving wall 11 axially away from end 26 reduces threshold value P, eventually to zero; in which latter case, valve assembly 1 permits flow from environment 6 to environment 5 for any pressure difference between environments 6 and 5.

Conversely, moving wall 11 axially towards end 26 increases threshold value P.

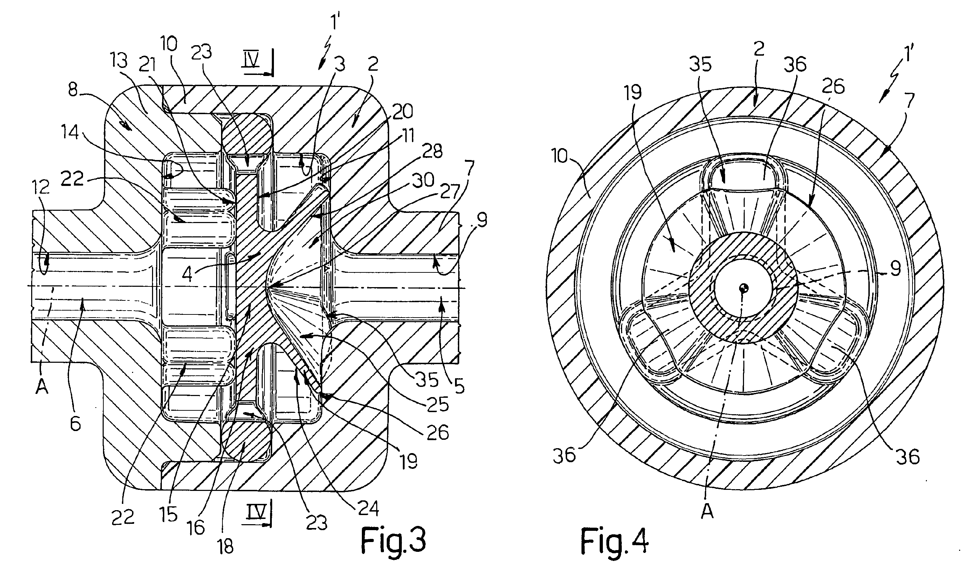

The Figure 3 embodiment shows a valve assembly 1' similar to valve assembly 1, and the component parts of which are indicated, where possible, using the same reference numbers as for the corresponding parts of valve assembly 1.

Valve assembly 1' differs from valve assembly 1 by wall 11 comprising a groove 35, which imparts an undulated shape to wall 11. Groove 35 cooperates with end 26 to separate environments 5 and 6 hermetically, when the pressure in environment 6 exceeds the pressure in environment 5 by an amount above threshold value P, and is disengaged by end 26, to permit fluid flow, when the pressure difference between environments 6 and 5 is below threshold value P.

More specifically, groove 35 comprises a number of - in the example shown, three - contiguous lobes 36 equally spaced angularly and lying in a plane set back towards environment 5 with respect to wall 11.

With particular reference to Figure 3, when the pressure in environment 6 exceeds the pressure in environment 5 by an amount above threshold value P, end 26 of portion 19 adheres to groove 35, at each lobe 36, so that cavity 30 is cut off fluidically from openings 23 to separate environments 5 and 6 in fluidtight manner.

Conversely, when the pressure difference between environments 6 and 5 is less than or equal to threshold value P, end 26 does not adhere to groove 35, so that cavity 30 is connected fluidically to openings 23 to permit fluid flow between environments 6 and 5.

Threshold value P therefore depends, not only on the shape of portion 19 and the axial position of wall 11 with respect to portion 19, but also on the shape of groove 35.

The advantages of valve assembly 1, 1' according to the present invention will be clear from the foregoing description.

In particular, valve assembly 1, 1' is formed in two parts, thus reducing the number of moving parts and relative machining and assembly costs.

Clearly, changes may be made to valve assemblies 1, 1' according to the present invention without, however, departing from the protective scope of the accompanying Claims.

## Claims

1. A valve assembly (1, 1') comprising a casing (2) defining a cavity (3) for passage of a fluid; and a valve (4) housed in said cavity (3); said valve (4) comprising first sealing means (18) cooperating with said casing (2) to divide the cavity (3) into a first and a second environment (6, 5); at least one opening (23) permitting flow of said fluid between said first and said second environment (6, 5); and second sealing means (19) varying in configuration to permit/prevent communication between said first and said second environment (6, 5) through said opening (23);
**characterized in that** said second sealing means (19) also cooperate with said casing (2), on the side facing said second environment (5), to prevent said first and said second environment (6, 5) from communicating fluidically through said opening (23).

2. A valve assembly as claimed in Claim 1, **characterized in that** said second sealing means (19) and said casing (2) define a cavity (30) isolated fluidically from said opening (23) when the pressure in said first environment (6) exceeds the pressure in said second environment (5) by an amount above a predetermined threshold value (P); and **in that** said cavity (30) is connectable fluidically to said opening (23), by detaching said second sealing means (19) from said casing (2), to permit flow of said fluid through the opening (23), when the pressure in said first environment (6) exceeds the pressure in said second environment (5) by an amount less than or equal to a threshold value (P) depending on the geometry of said second sealing means (19).

3. A valve assembly as claimed in Claim 2, **characterized in that** said second sealing means (19) cooperate hermetically with a portion (11) of said casing (2); and **in that** said threshold value (P) is related to the position of said portion (11) of the casing with respect to said second sealing means (19).

4. A valve assembly as claimed in Claim 3, **characterized in that** said portion (11) of the casing (2) comprises at least one undulated portion (35); and **in that** said threshold value (P) is related to the shape of said undulated portion (35).

5. A valve assembly as claimed in any one of the foregoing Claims, **characterized in that** said first and second sealing means (18, 19) and said opening (23) are defined integrally by one body.

6. A valve assembly as claimed in any one of the foregoing Claims, **characterized in that** said valve (4) is made at least partly of flexible material.

7. A valve assembly (1, 1') comprising a casing (2) defining a cavity (3) for passage of a fluid; and a valve (4) housed in said cavity (3); said valve (4) comprising first sealing means (18) cooperating with said casing (2) to divide the cavity (3) into a first and a second environment (6, 5); at least one opening (23) permitting flow of said fluid between said first and said second environment (6, 5); and second sealing means (19) varying in configuration to permit/prevent communication between said first and said second environment (6, 5) through said opening (23);
**characterized in that** at least said second sealing means (19) and said opening (23) are defined integrally by one body.

8. A valve assembly as claimed in Claim 7, **characterized in that** said first and second sealing means (18, 19) and said opening (23) are defined integrally by one body.
